# EUROPÄISCHE PATENTSCHRIFT

(11) **EP 1 493 626 B1**
(45) Veröffentlichungstag und Bekanntmachung des Hinweises auf die Patenterteilung: **23.12.2009**
(21) Anmeldenummer: 04015058.3
(22) Anmeldetag: 26.06.2004
(51) Int. Cl.: B60R 11/00, H05K 5/00, H05K 5/02, B60R 16/02

(54) **Steuergerät mit blockierenden Befestigungsstellen**
Control device with lockable fastening points
Dispositif de commande avec points de fixation blocable

(30) Priorität: 02.07.2003 DE 10329741
(43) Veröffentlichungstag der Anmeldung: 05.01.2005
(73) Patentinhaber: ROBERT BOSCH GMBH, 70442 Stuttgart (DE)
(72) Erfinder: Jakob, Gert, 70378 Stuttgart (DE); Eckert, Bernd, 71665 Vaihingen/Enz (DE)

(56) Entgegenhaltungen:
- EP-A- 0 790 149
- EP-A- 1 296 545
- DE-A1- 4 300 342

## Beschreibung

### Stand der Technik

Die Erfindung geht aus von einem Steuergerät mit mehreren möglichen Befestigungsstellen für die Aufnahme von Befestigungsmitteln nach der Gattung des unabhängigen Anspruchs. Aus dem Anforderungskatalog "Auslöseeinheit Rückhalte System (ARS)", Arbeitskreis ARS, 17.9.93 ist bereits ein Steuergerät mit Befestigungsstellen bekannt. Die Sensorik eines solchen Steuergerätes hat die Aufgabe den fahrdynamischen Zustand eines Fahrzeuges zu überwachen und ist auf den jeweiligen Einbauort in Bezug auf die Fahrzeugachsen zu justieren. Eine falsche Einbaulage führt zu Fehlmessungen und zu einem Versagen der Sicherheitsfunktion. Um eine korrekte Einbaulage sicherzustellen, sieht der genannte Anforderungskatalog ein Steuergerät mit drei asymmetrisch angeordneten Befestigungsstellen vor. Eine Einbauplattform mit drei zu den Befestigungsstellen korrespondierenden Befestigungsbolzen wird als Gegenstück zum Steuergerät im Motorraum eines Fahrzeugs montiert. Durch die asymmetrische Anordnung der Befestigungsstellen und -bolzen wird somit eine eindeutige Einbaulage sichergestellt.

Der Einbauort der Steuergeräte ist typischerweise fahrzeugabhängig, so dass die Steuergeräte auf dem jeweiligen Fahrzeugtyp abzustimmen sind. Der Einbau eines fahrzeugfremden Steuergerätes führt zu Fehlfunktionen in einem sicherheitsrelevanten Bereich und ist unbedingt zu vermeiden. Durch die asymmetrische Anordnung der Befestigungsstellen gemäß dem Anforderungskatalog kann jedoch der Einbau eines Steuergerätes eines anderen Fahrzeugtyps nicht verhindert werden.

Ein Steuergerät gemäß dem Oberbegriff des Anspruchs 1 ist auch aus der DE 43 00 342 A1 bekannt.

Das erfindungsgemäße Steuergerät mit den Merkmalen des unabhängigen Anspruchs hat demgegenüber den Vorteil, dass das Steuergerät eine Vielzahl möglicher Befestigungsstellen aufweist und durch Blockieren mindestens einer Befestigungsstelle der Einbau des Steuergerätes in nicht dafür vorgesehenen Fahrzeugtypen verhindert wird.

Durch die in den Unteransprüchen aufgeführten Maßnahmen sind vorteilhafte Weiterbildungen und Verbesserungen des im unabhängigen Anspruch angegebenen Steuergerätes möglich.

Besonders vorteilhaft ist es, die mindestens eine blockierende Befestigungsstelle ohne Ausnehmung auszuführen. So können bereits bei der Herstellung die Gehäuse der Steuergeräte fahrzeugtypisch ausgebildet werden.

Gemäß einer weiteren bevorzugten Weiterbildung, ist mindestens eine mögliche Befestigungsstelle mit einer eingebrachten Vorrichtung blockiert. Dies erlaubt eine vorteilhafte einheitliche Fertigung der Gehäuse der Steuergeräte. Die fahrzeugtypische Blockierung einer Befestigungsstelle erfolgt durch Einbringen einer erfindungsgemäßen Vorrichtung in einem späteren Fertigungsschritt.

Gemäß einer weiteren bevorzugten Weiterbildung, ist die Vorrichtung zur Blockierung einer möglichen Befestigungsstellen als Klammer ausgeführt. Auf diese Weise kann mit einfachen Mitteln eine Befestigungsstelle effektiv blockiert werden.

Gemäß einer weiteren bevorzugten Weiterbildung, wird eine jeweilige Ausführungsform eines Steuergerätes über die Position mindestens einer blockierenden Befestigungsstelle festgelegt. Somit kann das Steuergerät in vorteilhafter Weise nur in bestimmungsgemäßen Einbauorten eingebaut werden. In nicht bestimmungsgemäßen Einbauorten wird der Einbau durch die blockierende Befestigungsstelle verhindert.

Gemäß einer weiteren bevorzugten Weiterbildung, weist das Steuergerät vier mögliche Befestigungsstellen auf, wobei eine der Befestigungsstellen blockiert ist. In dieser Ausführungsform lassen sich in vorteilhafter Weise die Steuergeräte gemäß dem Anforderungskatalog des Arbeitskreises ARS aufbauen, wobei gleichzeitig die Empfehlungen des Arbeitskreises erfüllt sind.

Gemäß einer weiteren bevorzugten Weiterbildung, ist das Steuergerät in vorteilhafter Weise als Airbag-Steuergerät ausgeführt.

Gemäß einer weiteren bevorzugten Weiterbildung, sind die möglichen Befestigungsstellen in einem rechtwinkligem Rastermaß 70 mal 95 mm angeordnet. Somit werden in vorteilhafter Weise die Anforderungen für Auslöseeinheit Rückhaltesysteme, gemäß Arbeitskreis ARS erfüllt.
Zeichnungen

Ein Ausführungsbeispiel der Erfindung ist in der Zeichnung dargestellt und in der nachfolgenden Beschreibung näher erläutert.

Es zeigen:

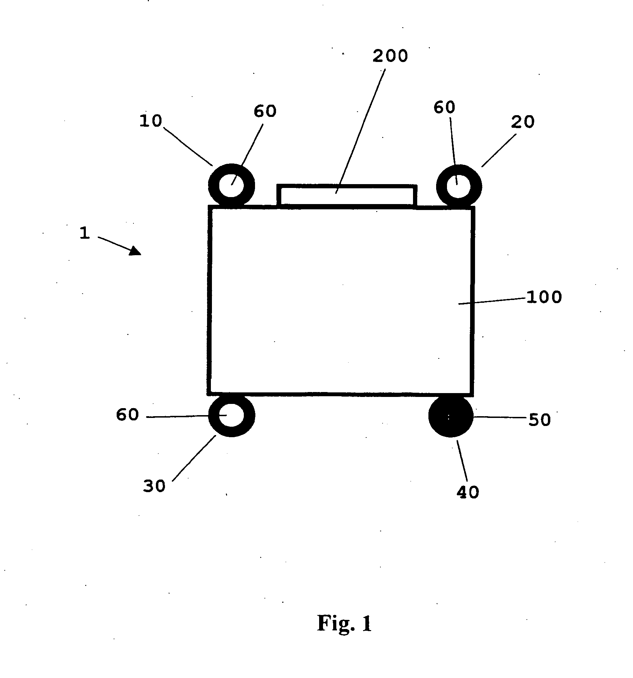

Figur 1 ein erfindungsgemäßes Steuergerät mit einer vollständig geschlossenen Befestigungsstelle;

### Beschreibung der Ausführungsbeispiele

Figur 1 zeigt ein erfindungsgemäßes Steuergerät 1 in der Aufsicht. Das Gehäuse 100 des Steuergerätes 1 ist rechteckig ausgeführt und weist vier mögliche Befestigungsstellen auf, die jeweils an der Längsseite des Gehäuses in den Eckenbereichen angeordnet sind. Auf einer Längsseite des Gehäuses 100 ist zwischen zwei Befestigungsstellen 10, 20 ein Stecker 200 angeordnet. Auf der dem Stecker 200 gegenüberliegenden Längsseite des Gehäuses 100 ist eine Befestigungsstelle 40 als blockierende Befestigungsstelle 50 ausgeführt. Die blockierende Befestigungsstelle 50 ist geschlossen ausgeführt und für die Aufnahme eines Befestigungsmittels ungeeignet. Die übrigen drei Befestigungsstellen 10, 20, 30 weisen Ausnehmungen für die Aufnahme eines Befestigungsmittels auf.

Die Anordnung der möglichen Befestigungsstellen ist so ausgebildet, dass durch ein "Schlüssel-Schloss"-Prinzip eine Verwechslung bei der Montage auszuschließen ist. So können einander ähnliche Geräte aufgrund unterschiedlicher Ausführungen der möglichen Befestigungsstellen nicht falsch eingebaut werden.

Sind beispielsweise gemäß des in Figur 1 gezeigten Ausführungsbeispiels vier mögliche Befestigungsstellen 10 bis 40 vorgesehen, wobei die eine Befestigungsstelle 40 als blockierende Befestigungsstelle 50 geschlossen ausgeführt ist und die verbleibenden drei Befestigungsstellen 10, 20, 30 Ausnehmungen (60) für die Aufnahme eines Befestigungsmittels aufweisen. Durch unterschiedliche Positionierung der blockierenden Befestigungsstelle 50 können vier unterschiedliche Ausführungsformen festgelegt werden. Den jeweiligen Ausführungsformen der Steuergeräte sind Einbauplattformen zugeordnet, die Befestigungsmittel korrespondierend zu den Positionen der offenen Befestigungsstellen 10, 20, 30 aufweisen, während an der Position der blockierenden Befestigungsstelle 50 kein Befestigungsmittel vorgesehen ist. Wird versucht ein Steuergerät in eine nicht dafür vorgesehenen Einbauplattform einzubauen, trifft eine blockierende Befestigungsstelle 50 auf ein Befestigungsmittel der Einbauplattform und verhindert so einen unzulässigen Einbau.

Als Befestigungsmittel sind an den Einbauplattformen typischerweise Gewindebolzen oder - stangen vorgesehen, deren Positionen durch die jeweilige Ausführungsform des Steuergerätes festgelegt ist.

Bei dem in Figur 1 gezeigten Ausführungsbeispiel gibt es zu jeder gewählten Position eine rotationssymmetrischen Variante. Diese rotationssymmetrische Variante kann durch Drehen um 180 Grad in eine nicht bestimmungsgemäße Einbauplattform eingebaut werden. Dieser fehlerhafte Einbau wird jedoch bei der Montage sofort erkannt, da durch das Drehen des Steuergerätes (1) der Stecker (200) auf der gegenüberliegenden Seite liegt und nicht mehr mit dem an der Einbauplattform vorgesehenen Stecker verbunden werden kann.

In weiteren nicht gezeigten Ausführungsbeispiele kann eine beliebige Anzahl von möglichen Befestigungsstellen vorgesehen sein. Auch ist es denkbar, mehr als eine blockierende Befestigungsstelle vorzusehen, so dass sich eine Vielzahl möglicher Kombinationen offener und blockierender Befestigungsstellen ergibt.

Die blockierenden Befestigungsstellen können auf unterschiedlichen Weisen hergestellt werden. Bei einem Druckguss Gehäuse ist es beispielsweise möglich durch Ausstanzen oder Stehen lassen der Gusshaut offene oder blockierende Befestigungsstellen zu erzeugen. Auch können bereits in der Guss-Form Befestigungsstellen mit Ausnehmungen und voll ausgegossenen blockierenden Befestigungsstellen vorgesehen sein.

In einer weiteren Herstellungsvariante sind alle möglichen Befestigungsstellen 10 bis 40 mit Ausnehmungen (60) versehen. Durch Einbringen einer geeigneten Vorrichtung in eine Befestigungsstelle wird diese Befestigungsstelle blockiert. Als geeignete blockierende Vorrichtungen können beispielsweise Pfropfen, Klammern oder ähnliches eingesetzt werden. Hierdurch wird es möglich die Kennzeichnung der verschiedenen Ausführungsformen der Gehäuse in einem späteren Fertigungsschritt vorzunehmen.

Den Herstellungsvarianten ist gemeinsam, dass eine einheitliche Gehäuseplattform genutzt werden kann und die unterschiedlichen Ausführungsformen durch geringe Modifikationen beim Gießen oder später festgelegt und gekennzeichnet werden können.

Die Nutzung einer gemeinsamen Gehäuseplattform hat weiterhin den Vorteil, dass auch die Konstruktionen der Leiterplatte, Stecker etc. unverändert beibehalten werden können, so dass beispielsweise bei einem Airbag-Steuergerät nur der Crash-Datensatz zu verändern ist.

## Patentansprüche

1. Steuergerät (1)
- mit mehreren möglichen Befestigungsstellen (10, 20, 30, 40) für die Aufnahme von Befestigungsmitteln,
**dadurch gekennzeichnet, dass**
- mindestens eine der möglichen Befestigungsstellen (10 - 40) eine blockierende Befestigungsstelle (50) ist, die die Aufnahme eines Befestigungsmittels verhindert.

2. Steuergerät (1) nach Anspruch 1, **dadurch gekennzeichnet, dass**
die mindestens eine blockierende Befestigungsstelle (50) ohne Ausnehmung ausgeführt ist und so die Aufnahme des Befestigungsmittels verhindert.

3. Steuergerät (1) nach Anspruch 1, **dadurch gekennzeichnet, dass**
die mindestens eine blockierende Befestigungsstelle (50) mit einer Ausnehmung ausgeführt ist, in die eine Vorrichtung eingebracht ist, die die Aufnahme des Befestigungsmittels in diese Aufnehmung verhindert.

4. Steuergerät (1) nach Anspruch 3, **dadurch gekennzeichnet, dass** die Vorrichtung, die die Aufnahme des im Befestigungsmittels verhindert, eine Klammer ist.

5. Steuergerät (1) nach mindestens einem der vorhergehenden Ansprüchen, **dadurch gekennzeichnet, dass**
eine jeweilige Ausführungsform des Steuergerätes über die Position der mindestens einen blockierenden Befestigungsstelle (50) festgelegt ist.

6. Steuergerät (1) nach mindestens einem der vorhergehenden Ansprüchen, **dadurch gekennzeichnet, dass** die mindestens eine blockierende Befestigungsstelle (50) den Einbau des Steuergerätes an einer nicht bestimmungsgemäßen Einbauplattform verhindert.

7. Steuergerät (1) nach mindestens einem der vorhergehenden Ansprüchen, **dadurch gekennzeichnet, dass**
- das Steuergerät vier mögliche Befestigungsstellen (10 - 40) aufweist,
- wobei drei Befestigungsstellen (10, 20, 30) jeweils eine Ausnehmung für die Aufnahme eines Befestigungsmittel aufweisen,
- wobei eine vierte Befestigungsstelle (40) eine blockierende Befestigungsstelle (50) ist.

8. Steuergerät (1) nach mindestens einem der vorhergehenden Ansprüchen, **dadurch gekennzeichnet, dass** das Steuergerät in (1) ein Airbag-Steuergerät ist.

9. Steuergerät (1) nach mindestens einem der vorhergehenden Ansprüchen, **dadurch gekennzeichnet, dass** die möglichen Befestigungsstellen (10 - 40) in einem rechtwinkligen Rastermaß 70 x 95 mm angeordnet sind.

## Claims

1. Control unit (1)
- having a plurality of possible fastening points (10, 20, 30, 40) for holding fastening means,
**characterized in that**
- at least one of the possible fastening points (10-40) is a blocking fastening point (50) which prevents a fastening means from being held.

2. Control unit (1) according to Claim 1,
**characterized in that**
the at least one blocking fastening point (50) is formed without a recess and thereby prevents the fastening means from being held.

3. Control unit (1) according to Claim 1,
**characterized in that**
the at least one blocking fastening point (50) is formed with a recess into which a device is inserted which prevents the fastening means from being held in said recess.

4. Control unit (1) according to Claim 3,
**characterized in that** the device which prevents the fastening means from being held is a clamp.

5. Control unit (1) according to at least one of the preceding claims, **characterized in that**
a respective embodiment of the control unit is defined by the position of the at least one blocking fastening point (50).

6. Control unit (1) according to at least one of the preceding claims, **characterized in that** the at least one blocking fastening point (50) prevents the control unit from being installed on an installation platform not intended for said control unit.

7. Control unit (1) according to at least one of the preceding claims, **characterized in that**
- the control unit has four possible fastening points (10-40),
- with three fastening points (10, 20, 30) having in each case one recess for holding a fastening means,
- with a fourth fastening point (40) being a blocking fastening point (50).

8. Control unit (1) according to at least one of the preceding claims, **characterized in that** the control unit (1) is an airbag control unit.

9. Control unit (1) according to at least one of the preceding claims, **characterized in that** the possible fastening points (10-40) are arranged in a rectangular grid of 70 x 95 mm dimensions.

## Revendications

1. Appareil de commande (1)
- comprenant plusieurs points de fixation possibles (10, 20, 30, 40) pour recevoir des moyens de fixation,
**caractérisé en ce que**
- au moins l'un des points de fixation possibles (10-40) est un point de fixation bloquant (50), qui empêche la réception d'un moyen de fixation.

2. Appareil de commande (1) selon la revendication 1, **caractérisé en ce que** l'au moins un point de fixation bloquant (50) est réalisé sans évidement et donc empêche la réception du moyen de fixation.

3. Appareil de commande (1) selon la revendication 1, **caractérisé en ce que** l'au moins un point de fixation bloquant (50) est réalisé avec un évidement dans lequel est monté un dispositif qui empêche la réception du moyen de fixation dans cet évidement.

4. Appareil de commande (1) selon la revendication 3, **caractérisé en ce que** le dispositif qui empêche la réception du moyen de fixation, est une pince.

5. Appareil de commande (1) selon au moins l'une quelconque des revendications précédentes,
**caractérisé en ce qu'**une forme de réalisation respective de l'appareil de commande est établie par le biais de la position de l'au moins un point de fixation bloquant (50).

6. Appareil de commande (1) selon au moins l'une quelconque des revendications précédentes, **caractérisé en ce que** l'au moins un point de fixation bloquant (50) empêche l'installation de l'appareil de commande sur une plate-forme d'installation non conforme aux exigences.

7. Appareil de commande (1) selon au moins l'une quelconque des revendications précédentes, **caractérisé en ce que**
- l'appareil de commande présente quatre points de fixation possibles (10 - 40),
- trois points de fixation (10, 20, 30) présentant chacun un évidement pour la réception d'un moyen de fixation,
- un quatrième point de fixation (40) étant un point de fixation bloquant (50).

8. Appareil de commande (1) selon au moins l'une quelconque des revendications précédentes, **caractérisé en ce que** l'appareil de commande (1) est un appareil de commande d'airbag.

9. Appareil de commande (1) selon au moins l'une quelconque des revendications précédentes, **caractérisé en ce que** les points de fixation possibles (10 - 40) sont disposés dans un quadrillage rectangulaire de 70 x 95 mm.
